# FASCICULE DE BREVET EUROPEEN

(11) **EP 3 280 947 B1**
(45) Date de publication et mention de la délivrance du brevet: **09.10.2019**
(21) Numéro de dépôt: 16730444.3
(22) Date de dépôt: 07.04.2016
(51) Int. Cl.: F17C 9/02, F17C 9/04

(54) **PROCEDE DE RECUPERATION D'ENERGIE A PARTIR DE LA GLACE CARBONIQUE A PRESSION INFRA ATMOSPHERIQUE**
VERFAHREN ZUR RÜCKGEWINNUNG VON ENERGIE AUS TROCKENEM EIS BEI INFRA-ATMOSPHÄRENRUCK
METHOD FOR RECOVERING ENERGY FROM DRY ICE AT INFRA-ATMOSPHERIC PRESSURE

(30) Priorité: 08.04.2015 FR 1553020
(43) Date de publication de la demande: 14.02.2018
(73) Titulaire: Cryo Pur, 91120 Palaiseau (FR)
(72) Inventeur: CLODIC, Denis, 91120 Palaiseau (FR); TOUBASSY, Joseph, 91120 Palaiseau (FR)
(74) Mandataire: Dejade & Biset
(86) Numéro de dépôt international: PCT/FR2016/050807
(87) Numéro de publication internationale: WO 2016/162643

(56) Documents cités:
- WO-A2-2010/100136
- DE-A1-102013 014 912
- GB-A- 678 995
- US-A- 5 787 716
- US-A1- 2003 014 879

## Description

L'invention a trait à un procédé et un dispositif de récupération de la chaleur froide utilisant de la glace carbonique à pression infra atmosphérique. Un procédé de récupération est connu de US2003/014879A1.

L'expression « infra atmosphérique » désigne ici des pressions inférieures à la pression atmosphérique.

Le dioxyde de carbone (CO₂) est utilisé dans de nombreuses applications variées, allant du domaine culinaire jusqu'à l'industrie lourde.

Dans l'industrie du gaz, par exemple, le méthane d'origine fossile ou d'origine biologique contient du CO₂ qu'il convient d'extraire, notamment avant le transport du méthane. En effet, avant son transport, le gaz méthane est liquéfié à des températures de liquéfaction proche de -160°C à la pression atmosphérique. Or, dans les mêmes conditions de pression, le CO₂ se solidifie à des températures proches de -80°C. Par conséquent, le méthane liquéfié est saturé en glace carbonique, ce qui est problématique pour les installations industrielles.

Le CO₂ est donc logiquement extrait par différents moyens connus, notamment en utilisant des techniques de nettoyage. Le CO₂ extrait est alors rejeté vers l'atmosphère ou recyclé pour d'autres applications.

La présente invention s'intéresse tout particulièrement au recyclage du CO₂ dans les installations industrielles.

La demande de brevet Français publiée sous le numéro FR 2 820 052 (ARMINES), présente un procédé et un système permettant l'extraction (la capture) du dioxyde de carbone par anti-sublimation à pression atmosphérique, également connu sous l'expression condensation solide. Le CO₂ est capturé par anti-sublimation à une température de l'ordre de -80°C à la pression de 0,89 bar absolu dans un évaporateur d'anti-sublimation. Un fluide caloporteur passe dans l'évaporateur d'anti-sublimation qui, une fois rempli de glace carbonique, passe en phase de dégivrage. Le CO₂ solide se liquéfie et le fluide caloporteur récupère l'énergie de liquéfaction. La variation d'enthalpie brute est de 228 kJ/kg. L'efficacité de transferts des échangeurs est de 90%. L'énergie récupérée par le fluide caloporteur est donc de 205 kJ/kg. En outre, le CO₂ passe d'une pression initiale de 0,89 bar absolu à l'état solide à une pression supérieure à 5,2 bar à l'état liquide.

Ce procédé antérieur présente des carences majeures. Les propriétés thermodynamiques du CO₂ ne sont pas exploitées de manière optimale. Une plus grande quantité d'énergie pourrait être recyclée à l'aide d'un procédé différent, et ce afin de récupérer une chaleur froide supérieure, à partir de la glace carbonique.

A cet effet, il est proposé, en premier lieu, un procédé de récupération d'énergie issue du changement d'état de la glace carbonique. Ce procédé est mis en oeuvre au moyen d'un dispositif comprenant :
- une enceinte contenant de la glace carbonique à une pression infra-atmosphérique ;
- un circuit primaire de récupération d'énergie traversant l'enceinte et dans lequel circule un fluide caloporteur.

Ce procédé comprend les étapes suivantes :
- passage du fluide caloporteur dans le circuit primaire, cette étape provoquant le réchauffement de la glace carbonique et son changement d'état en CO₂ et le refroidissement du fluide
   caloporteur;
   le procédé comprenant une étape de mise en dépression sensiblement continue de l'enceinte (2) à une pression infra-atmosphérique et une étape de transit du CO₂ extrait de l'enceinte (2) dans un échangeur (9) de chaleur dans lequel il est réchauffé par échange de chaleur avec un fluide caloporteur circulant dans un circuit (14) secondaire;
- extraction du CO₂ contenu dans l'enceinte, le CO2 extrait de l'enceinte étant gazeux.

Ce procédé comprend une étape de mise en dépression sensiblement continue de l'enceinte, à une pression infra-atmosphérique.

Diverses caractéristiques supplémentaires peuvent être prévues, seules ou en combinaison :
- le procédé comprend une étape de mesure sensiblement continue de la pression dans une canalisation d'aspiration, au moyen d'un capteur de pression ;
- le procédé comprend une étape de transmission de la pression mesurée par le capteur de pression à une unité centrale ;
- le procédé comprend une étape de régulation de la pression dans l'enceinte et dans la canalisation d'aspiration au moyen d'une pompe à vide située à une extrémité de la canalisation d'aspiration ;
- la pression dans l'enceinte est d'environ 0,00055 bar absolu.

Il est proposé, en second lieu, un dispositif de récupération d'énergie configuré pour mettre en oeuvre un procédé de récupération d'énergie tel que précédemment décrit, ce dispositif comprenant :
- une enceinte apte à contenir de la glace carbonique à une pression infra-atmosphérique et à une température de solidification correspondant à la pression infra-atmosphérique ;
- un circuit primaire de récupération d'énergie traversant l'enceinte et dans lequel circule un fluide caloporteur ;
- une canalisation d'aspiration permettant d'extraire du CO₂ de l'enceinte.

La canalisation d'aspiration est munie de moyens aptes à extraire le CO₂ et à permettre une mise en dépression continue de l'enceinte à une pression infra atmosphérique.

Diverses caractéristiques supplémentaires peuvent être prévues, seules ou en combinaison :
- le dispositif comprend un échangeur de chaleur traversé par la canalisation d'aspiration, l'échangeur de chaleur étant également traversé par un circuit secondaire, la canalisation d'aspiration comprenant en outre un capteur de pression et les moyens aptes à extraire le CO₂ étant une pompe à vide ;
- le dispositif comprend une unité centrale apte à traiter les informations provenant du capteur de pression et à réguler la puissance d'extraction de la pompe à vide.

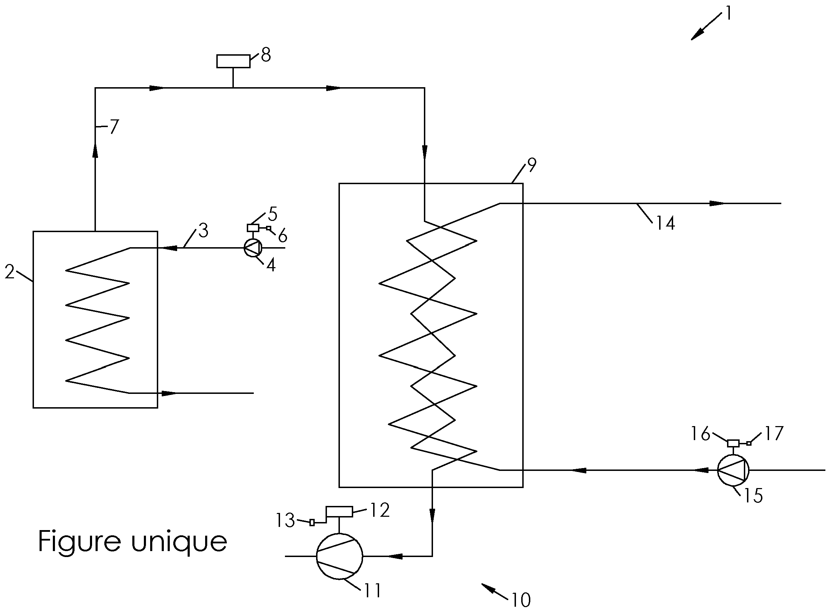

D'autres objets et avantages de l'invention apparaîtront à la lumière de la description d'un mode de réalisation, faite ci-après en référence à la figure représentant une vue schématique d'un dispositif de récupération d'énergie, à partir de la glace carbonique.

Sur la figure est représenté un dispositif **1** comprenant une enceinte **2** traversée par un circuit **3** primaire de récupération d'énergie.

Le circuit **3** primaire comprend une pompe **4** primaire. La pompe **4** primaire est pilotée par un moteur **5** primaire à vitesse variable lequel est commandé à son tour par un variateur **6** primaire de puissance.

Un fluide caloporteur circule dans le circuit **3** primaire. Le fluide caloporteur peut être liquide ou gazeux. Dans le cas où celui-ci est gazeux, la pompe **4** primaire est un compresseur.

Le dispositif **1** comprend une canalisation **7** d'aspiration munie d'un capteur **8** de pression d'aspiration.

La canalisation **7** d'aspiration traverse un échangeur **9** de chaleur avant de ressortir à une extrémité **10**. L'extrémité **10** est munie d'une pompe **11** à vide pilotée par un variateur **12** de fréquence lequel est commandé par un organe **13** de contrôle.

L'échangeur **9** de chaleur est en outre traversé par un circuit **14** secondaire de récupération de chaleur. Un fluide caloporteur circule dans le circuit **14** secondaire. Le circuit **14** secondaire comprend une pompe **15** secondaire. La pompe **15** secondaire est pilotée par un moteur **16** secondaire à vitesse variable lequel est commandé à son tour par un variateur **17** secondaire de puissance.

Le procédé de récupération d'énergie va être, maintenant, décrit en référence au tableau ci-dessous :

**Tableau**

| Température de saturation (°C) | Pression (bar absolu) | Masse volumique (kg/m³) | Chaleur latente de sublimation (kJ/kg) |
|---|---|---|---|
| -140 | 0,00055 | 0,002 | 593,75 |
| -135 | 0,00134 | 0,005 | 592,0 |
| -130 | 0,00304 | 0,011 | 590,17 |
| -125 | 0,00646 | 0,023 | 588,25 |
| -120 | 0,01302 | 0,045 | 586,24 |
| -115 | 0,02500 | 0,083 | 584,11 |
| -110 | 0,04598 | 0,149 | 581,87 |
| -105 | 0,08137 | 0,257 | 579,50 |
| -100 | 0,13907 | 0,427 | 577,0 |
| -95 | 0,23033 | 0,689 | 574,32 |
| -90 | 0,37082 | 1,082 | 571,49 |
| -85 | 0,58193 | 1,660 | 568,49 |
| -80 | 0,89239 | 2,493 | 565,31 |
| -75 | 1,3402 | 3,678 | 561,92 |
| -70 | 1,9753 | 5,341 | 558,31 |
| -65 | 2,8626 | 7,655 | 554,44 |
| -60 | 4,0861 | 10,86 | 550,25 |
| -57 | 5,0258 | 13,35 | 547,54 |

Les données fournies dans le tableau ont trait au CO₂. Ce tableau donne, en partant de la colonne de gauche, la température de sublimation, la pression absolue de saturation, la masse volumique et la chaleur latente de sublimation.

Ces données sont fournies par le logiciel Refprop 9 avec des calculs complémentaire pour la chaleur latente de sublimation, basés sur les formulations de l'ouvrage intitulé *Thermodynamic properties in SI* de *W. C. Reynolds* du *department of Mechanical Engineering* de l'Université de Stanford.

Pour schématiser, l'énergie se décompose en deux parts. L'une des parts est transformable en énergie mécanique, tandis que l'autre ne l'est pas. La part transformable en énergie mécanique est appelée exergie. L'exergie permet donc de mesurer la qualité d'une énergie.

En ce qui concerne le CO₂, plus sa température est basse, plus la valeur exergétique de la chaleur latente est élevée.

Le CO₂ à l'état solide est appelé glace carbonique. A un instant initial, l'enceinte **2** comprend une masse donnée de glace carbonique. La pression dans l'enceinte **2** est infra atmosphérique, c'est-à-dire qu'elle est inférieure à la pression atmosphérique qui est d'environ 1 bar.

Cette pression infra atmosphérique est maintenue constante grâce à la pompe **11** à vide. Dans ce mode de réalisation, la pression dans l'enceinte est de 0,00055 bar absolu soit une température de sublimation de -140°C. L'enceinte **2** est revêtue d'une isolation efficace afin de réduire les échanges de chaleur avec le milieu extérieur.

Le fluide caloporteur circulant dans le circuit **3** primaire traverse l'enceinte **2** et est refroidi par échange de chaleur avec la glace carbonique.

La glace carbonique se réchauffe sous l'action du fluide caloporteur et se sublime instantanément lorsque sa température dépasse -140°C à la pression de 0,00055 bar absolu

La pression et la température tendent alors naturellement à augmenter sous l'effet de la sublimation de la glace carbonique. Pour éviter cela, la pompe **11** à vide extrait plus de CO₂ gazeux, afin que la pression de 0,00055 bar absolu reste constante de sorte que la température de sublimation se maintienne à -140°C. En effet, comme expliqué précédemment, la valeur exergétique de la chaleur latente est d'autant plus élevée que la température de sublimation est basse.

La récupération d'énergie se fait jusqu'à sublimation complète de la glace carbonique. Une fois que la glace carbonique a intégralement disparue, l'enceinte **2** est rechargée en glace carbonique.

La régulation de la pression dans l'enceinte **2** est effectuée en mesurant la pression dans la canalisation **7** d'aspiration au moyen du capteur **8** de pression d'aspiration.

La valeur de la pression dans la canalisation **7** d'aspiration est envoyée en continu à une unité centrale, non représentée sur la figure.

Lorsque la pression dans la canalisation **7** d'aspiration dépasse la pression cible, en l'occurrence 0,00055 bar absolu, alors l'unité centrale commande à la pompe **11** à vide, via l'organe **13** de contrôle et le variateur **12** de fréquence, d'extraire plus de CO₂ gazeux afin que la pression cible soit atteinte et reste constante dans la canalisation **7** d'aspiration. Les pressions dans l'enceinte **2** et dans la canalisation **7** d'aspiration sont sensiblement identiques.

Le CO₂ gazeux sortant de l'enceinte **2** traverse l'échangeur **9** de chaleur et cède une partie de sa chaleur sensible au fluide caloporteur circulant dans le circuit **14** secondaire.

Les débits des fluides caloporteurs dans le circuit **3** primaire et dans le circuit **14** secondaire peuvent être adaptés, afin que les échanges de chaleur avec la glace carbonique pour le circuit **3** primaire et avec le CO₂ gazeux pour le circuit **14** secondaire, soient le plus efficace possible.

Ainsi, une partie de la chaleur sensible est récupérée par le circuit **14** secondaire. La chaleur sensible par opposition à la chaleur latente correspond à l'énergie cédée sans qu'il n'y ait changement d'état du CO₂.

Avantageusement, le fluide caloporteur dans le circuit **14** secondaire et le CO₂ dans la canalisation **7** d'aspiration circulent à contre courant.

Le fluide caloporteur doit pouvoir ne pas se solidifier à ces températures cryogéniques proches de -140°C. Le propane peut être avantageusement utilisé comme fluide caloporteur pour cette raison.

Le transfert de chaleur dans l'échangeur **9** de chaleur s'effectue sur de grands écarts de températures. Typiquement, cet écart s'étend de -140°C à 20°C. La chaleur sensible est d'environ 120 kJ/kg.

Dans l'enceinte **2**, la chaleur latente de sublimation est d'environ 594 kJ/kg, en référence au tableau.

La chaleur totale récupérable est donc d'environ 714 kJ/kg. Avec des équipements permettant un échange de chaleur efficace à 90%, la chaleur totale effectivement récupérée est d'environ 643 kJ/kg.

Le procédé et le dispositif, ainsi décrits, permettent une récupération d'énergie de la glace carbonique bien plus efficace, en exploitant avantageusement les propriétés thermodynamiques du dioxyde de carbone.

## Revendications

1. Procédé de récupération d'énergie issue du changement d'état de la glace carbonique, ce procédé étant mis en oeuvre au moyen d'un dispositif (**1**) comprenant :
- une enceinte (**2**), contenant de la glace carbonique à une pression infra-atmosphérique ;
- un circuit (**3**) primaire de récupération d'énergie, traversant l'enceinte (**2**) et dans lequel circule un fluide caloporteur ;
le procédé comprenant les étapes suivantes :
- passage du fluide caloporteur dans le circuit (3) primaire, cette étape provoquant le réchauffement de la glace carbonique et son changement d'état en CO₂ et le refroidissement du fluide caloporteur;
- extraction du CO₂ contenu dans l'enceinte (2) ; le CO₂ extrait de l'enceinte (2) étant gazeux;
le procédé comprenant
une étape de mise en dépression sensiblement continue de l'enceinte (**2**) à une pression infra-atmosphérique et une étape de transit du CO₂ extrait de l'enceinte (**2**) dans un échangeur (**9**) de chaleur dans lequel il est réchauffé par échange de chaleur avec un fluide caloporteur circulant dans un circuit (**14**) secondaire.

2. Procédé selon l'une quelconque des revendications précédentes, **caractérisé en ce que** le procédé comprend une étape de mesure sensiblement continue de la pression dans une canalisation (**7**) d'aspiration au moyen d'un capteur (**8**) de pression.

3. Procédé selon la revendication 2,
**caractérisé en ce que** le procédé comprend une étape de transmission de la pression mesurée par le capteur (**8**) de pression à une unité centrale.

4. Procédé selon la revendication 3, **caractérisé en ce que** le procédé comprend une étape de régulation de la pression dans l'enceinte (**2**) et dans la canalisation (**7**) d'aspiration, au moyen d'une pompe (**11**) à vide située à une extrémité de la canalisation (**7**) d'aspiration.

5. Procédé selon l'une quelconque des revendications précédentes, **caractérisé en ce que** la pression dans l'enceinte (**2**) est d'environ 0,00055 bar absolu.

6. Dispositif (**1**) de récupération d'énergie configuré pour mettre en oeuvre un procédé de récupération d'énergie selon l'une des revendications 1 ou 2, ce dispositif (**1**) comprenant :
- une enceinte (**2**), apte à contenir de la glace carbonique à une pression infra-atmosphérique et à une température de solidification correspondant à la pression infra-atmosphérique ;
- un circuit (**3**) primaire de récupération d'énergie, traversant l'enceinte (**2**), et dans lequel circule un fluide caloporteur ;
- une canalisation (**7**) d'aspiration, permettant d'extraire du CO₂ de l'enceinte (**2**), la canalisation (**7**) d'aspiration étant munie de moyens aptes à extraire le CO₂ et à permettre une mise en dépression continue de l'enceinte (**2**) à une pression infra atmosphérique, et en ce que le dispositif (**1**) comprend en outre un circuit (**14**) secondaire et un échangeur (**9**) de chaleur traversé par la canalisation (**7**) d'aspiration et par le circuit (**14**) secondaire.

7. Dispositif (**1**) selon la revendication 6, pour mettre en oeuvre le procédé selon l'une des revendications 3 ou 4, **caractérisé en ce que** la canalisation (**7**) d'aspiration comprend en outre un capteur (**8**) de pression et les moyens aptes à extraire le CO₂ étant une pompe (**11**) à vide.

8. Dispositif (**1**) selon la revendication 7 pour mettre en oeuvre le procédé selon l'une des revendications 5 à 6, **caractérisé en ce que** le dispositif (**1**) comprend une unité centrale, apte à traiter les informations provenant du capteur (**8**) de pression et à réguler la puissance d'extraction de la pompe (**11**) à vide.

## Patentansprüche

1. Rückgewinnungsverfahren der aus der Zustandsänderung von Trockeneis hervorgegangenen Energie, wobei dieses Verfahren mittels einer Vorrichtung (1) umgesetzt ist, umfassend:
- eine Einfassung (2), die Trockeneis bei einem infra-atmosphärischem Druck enthält;
- einen primären Energierückgewinnungs-Kreislauf (3), der die Einfassung (2) durchquert und in dem ein Heiz-/Kühlmedium fließt,
wobei das Verfahren die folgenden Schritte umfasst:
- Durchgang des Heiz-/Kühlmediums in dem primären Kreislauf (3), wobei dieser Schritt das Erwärmen des Trockeneises und seine Zustandsänderung in CO₂ und das Abkühlen des Heiz-/Kühlmediums hervorruft;
- Extraktion des in der Einfassung (2) enthaltenen CO₂;
wobei das aus der Einfassung (2) extrahierte CO₂ gasförmig ist;
wobei das Verfahren einen Unterdruck-Beaufschlagungsschritt umfasst, der die Einfassung (2) deutlich unter einem infra-atmosphärischem Druck weiterführt, und einen Übergangsschritt des aus der Einfassung (2) extrahierten CO₂ in einem Wärmetauscher, in dem es per Wärmeaustausch mit einem Heiz-/Kühlmedium erwärmt wird, das in einem sekundären Kreislauf (14) zirkuliert.

2. Verfahren gemäß irgendeinem der voranstehenden Ansprüche, **dadurch gekennzeichnet, dass** das Verfahren einen Messschritt umfasst, der den Druck in einer Ansaugkanalisation (7) mittels eines Drucksensors (8) deutlich fortführt.

3. Verfahren gemäß Anspruch 2, **dadurch gekennzeichnet, dass** das Verfahren einen Übertragungsschritt des von dem Drucksensor (8) in einer zentralen Einheit gemessenen Drucks umfasst.

4. Verfahren gemäß Anspruch 3, **dadurch gekennzeichnet, dass** das Verfahren einen Einstellschritt des Drucks in der Einfassung (2) und in der Ansaugkanalisation (7) mittels einer Vakuumpumpe (11) umfasst, die an einem Ende der Ansaugkanalisation (7) angeordnet ist.

5. Verfahren nach irgendeinem der voranstehenden Ansprüche, **dadurch gekennzeichnet, dass** der Druck in der Einfassung (2) ungefähr 0,00055 absolute bar beträgt.

6. Energie-Rückgewinnungsvorrichtung (1), die gestaltet ist, um ein Rückgewinnungsverfahren von Energie gemäß einem der Ansprüche 1 oder 2 umzusetzen, wobei diese Vorrichtung (1) umfasst:
- eine Einfassung (2), die geeignet ist, um Trockeneis unter einem infra-atmosphärischem Druck und bei einer Erstarrungstemperatur zu enthalten, die dem infra-atmosphärischem Druck entspricht;
- einen primären Energierückgewinnungs-Kreislauf (3), der die Einfassung (2) durchquert, und in dem ein Heiz-/Kühlmedium zirkuliert;
- eine Ansaugkanalisation (7), die das Extrahieren des CO₂ der Einfassung (2) erlaubt,
wobei die Ansaugkanalisation (7) mit Mitteln bestückt ist, die geeignet sind, das CO₂ zu extrahieren und um eine kontinuierliche UnterdruckBeaufschlagung der Einfassung (2) mit einem infra-atmosphärischem Druck zu erlauben und dass die Vorrichtung (1) darüber hinaus einen sekundären Kreislauf (14) und einen Wärmetauscher (9) umfasst, der von der Ansaugkanalisation (7) und dem sekundären Kreislauf (14) durchquert ist.

7. Vorrichtung (1) gemäß Anspruch 6, um das Verfahren gemäß einem der Ansprüche 3 oder 4 umzusetzen, **dadurch gekennzeichnet, dass** die Ansaugkanalisation (7) darüber hinaus einen Drucksensor (8) umfasst und die Mittel, die zum Extrahieren des CO₂ geeignet sind, eine Vakuumpumpe (11) sind.

8. Vorrichtung (1) gemäß Anspruch 7, um das Verfahren gemäß einem der Ansprüche 5 bis 6 umzusetzen, **dadurch gekennzeichnet, dass** die Vorrichtung (1) eine zentrale Einheit umfasst, die geeignet ist, die aus dem Drucksensor (8) stammenden Informationen zu verarbeiten und die Extraktionsleistung der Vakuumpumpe (11) zu regulieren.

## Claims

1. A method for recovering energy from the change of phase of carbon dioxide ice, this method being implemented by means of a device (1) comprising:
- an enclosure (2), containing carbon dioxide ice at a sub-atmospheric pressure;
- an energy recovering primary circuit (3), passing through the enclosure (2) and in which a coolant circulates;
the method comprising the following steps of:
- passing the coolant into the primary circuit (3), this step causing the carbon dioxide ice to be warmed and its change of phase into CO₂ and the coolant to be cooled;
- extracting the CO₂ content in the enclosure (2);
the CO₂ extracted from the enclosure (2) being gaseous;
the method comprising a step of substantially continuous depressurising the enclosure (2) at a sub-atmospheric pressure and a step of transiting the CO₂ extracted from the enclosure (2) into a heat exchanger (9) in which it is warmed by heat exchange with a coolant circulated in a secondary circuit (14).

2. The method according to any of the preceding claims, **characterised in that** the method comprises a step of substantially continuously measuring the pressure in a suction piping (7) by means of a pressure sensor (8).

3. The method according to claim 2, **characterised in that** the method comprises a step of transmitting the pressure measured by the pressure sensor (8) to a central processing unit.

4. The method according to claim 3, **characterised in that** the method comprises a step of regulating the pressure in the enclosure (2) and in the suction piping (7), by means of a vacuum pump (11) located at one end of the suction piping (7).

5. The method according to any of the preceding claims, **characterised in that** the pressure in the enclosure (2) is about 0.00055 absolute bar.

6. An energy recovery device (1) configured to implement an energy recovery method according to one of claims 1 or 2, this device (1) comprising:
- an enclosure (2), able to contain carbon dioxide ice at a sub-atmospheric pressure and at a solidification temperature corresponding to the sub-atmospheric pressure;
- an energy recovery primary circuit (3), passing through the enclosure (2) and in which a coolant circulates;
- a suction piping (7), enabling CO₂ to be extracted from the enclosure (2),
the suction piping (7) being provided with means able to extract CO₂ and to enable the enclosure (2) to be continuously depressurised at a sub-atmospheric pressure, and in that the device (1) further comprises a secondary circuit (14) and a heat exchanger (9) through which the suction piping (7) and the secondary circuit (14) pass.

7. The device (1) according to claim 6, for implementing the method according to one of claims 3 or 4, **characterised in that** the suction piping (7) further comprises a pressure sensor (8) and the means able to extract CO₂ being a vacuum pump (11).

8. The device (1) according to claim 7 for implementing the method according to one of claims 5 to 6, **characterised in that** the device (1) comprises a central processing unit, able to process information from the pressure sensor (8) and to regulate the extraction power of the vacuum pump (11).
